# EUROPEAN PATENT APPLICATION

(11) **EP 1 432 159 A1**
(43) Date of publication of application: **23.06.2004**
(21) Application number: 02028196.0
(22) Date of filing: 19.12.2002
(51) Int. Cl.: H04J 3/06

(54) **A method of transmitting data frames in a radio communication system**

(71) Applicant: Digital Multimedia Technologies, 20035 Lissone (MI) (IT)
(72) Inventor: Beretta, Eugenio, 20050 Sovico (MI) (IT)
(74) Representative: Grünecker, Kinkeldey, Stockmair & Schwanhäusser Anwaltssozietät

(57) **Abstract**

A communication protocol for the transmission of data, for instance in a master-slave structure comprising at least a master unit and a slave unit. The data to be transmitted are contained in frames and/or packages comprising several fields. The communication protocol allows to unambiguously recognize the beginning and the end of the frames of data by selecting at least two predefined symbols along those belonging to the protocol for identifying the start and the end of a frame. Moreover, said two preselected symbols are given another function than identifying the beginning and the end of a frame when opportunely preceded by a third preselected symbol. Accordingly, the two preselected symbols unambiguously identifying the beginning and the end of a frame when used singularly but can be used for other purposes than identifying the beginning and the end of a frame when used in combination with the third preselected symbol.

## Description

### FIELD OF THE PRESENT INVENTION

The present invention relates generally to RF (radio frequency) transmission. More particularly, the present invention relates to radio communication devices such as transmitters and/or receivers of the kind used in RF transmission. In more details, the present invention relates to the driving of radio communication devices and to a method of transmitting data for driving radio communication devices.

### DESCRIPTION OF THE PRIOR ART

In modern radio communication devices such as transmitters and/or receivers several operations have to be carried out for allowing said transmitters and/or receivers to operate properly. For example, modern satellite receivers require the very weak signals entering from the antenna to be amplified to levels usable in subsequent receiver processing circuits. In the same way, in modern transmitters, the power level emanating from message modulation circuits needs to be raised to a level suitable for long range transmission.

For allowing these operations to be adequately exploited together with other operations such as modulating and/or converting the signal, modern radio communication devices are usually equipped with a logic unit adapted to drive the several operating units of the device.

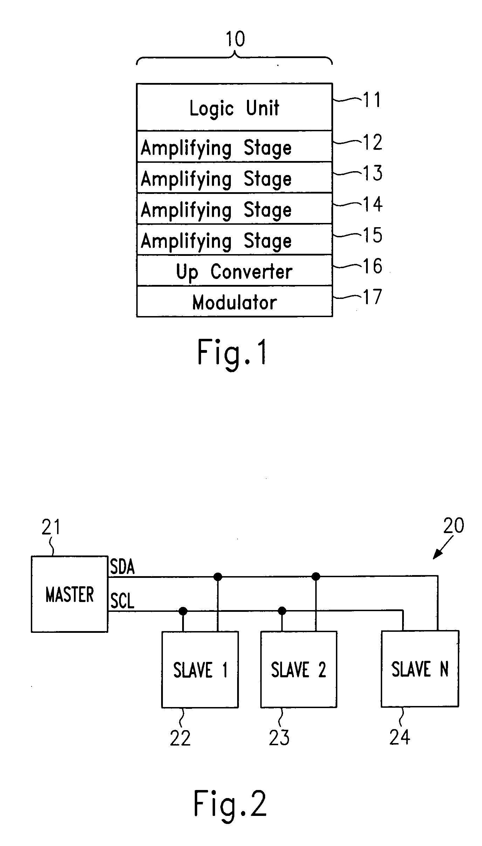

Briefly, the structure of a modern radio communication device can be schematically depicted as in Figure 1. In particular, in Figure 1 there is depicted the structure of a modern radio transmitter. However, the structure of a modern radio receiver could be represented in the same way and the following description of the radio transmitter of Figure 1 substantially also applies to the structure of a modern radio receiver. The detailed description of such a receiver is omitted for a reason of clarity.

As apparent from Figure 1, a modern radio transmitter 10 basically comprises a plurality of amplifying stages 12 to 15 and a pilot or driving unit comprising a modulating unit 17 and a converting unit 16. Finally, the transmitter 10 of Figure 1 comprises a logic unit 11 having the function of checking the operations exploited at the other units of the transmitter.

The transmitter 10 of Figure 1 operates as follows.

The signal entering the transmitter is first modulated at the modulating unit 17 and converted to a predefined transmission frequency at the converting unit 16. Subsequently, the signal is amplified at the amplifying stages 12 to 15 and finally emitted at the emitting unit (not shown in Figure 1).

As stated above, the amplifying unit 12 to 15, as well as the converting unit 16 and the modulating unit 17 are driven by the logic unit 11 containing the control logic suitable for controlling the operations to be exploited at the units 12 to 17.

For the purpose of driving the operation at the units 12 to 17 as well as other operations to be carried out in the transmitter 10, the logic unit 11 must be able to communicate in a reliable manner with the other units of the transmitter. In other words, the logic unit 11 needs to be able to transmit data to the other units and to receive and/or collect data from the other units.

However, a common problem arising in the known radio transmission devices (transmitters and receivers) is that the transmission of data from and to the logic unit is not adequately synchronized and as such is not reliable as requested in the most common applications.

Data from and to the logic unit 11 are transmitted as packages of data with said packages containing bits or bytes of digital data. In particular, the data to be transmitted are contained in one or more frames having a predefined structure.

The problem therefore arises of reliably recognizing the beginning and the end of a frame. In fact, if the beginning and/or the end of a frame cannot be recognized, some of the data to be transmitted could get lost during transmission or these data could be misunderstood or wrongly interpreted.

The problem of reliably recognizing the beginning and the end of a frame is also known as the "synchronization" problem.

To overcome this problem, several attempts have been made and several solutions have been proposed and developed in the art. In particular, the known synchronization techniques are divided into two categories namely "hardware" techniques and "software" techniques. According to the "hardware" techniques, synchronization is obtained by opportunely driving the transmission lines used for transmitting the data; according to the "software" techniques synchronization is obtained by opportunely structuring the frames of data to be transmitted.

A typical prior art hardware synchronization technique will be described in the following with reference to Figure 2.

In Figure 2, there is depicted a typical master-slave structure 20 wherein a master 21 communicates with a plurality of slaves 22 to 24 for the purpose of driving the operations at said slave units 22 to 24. In the structure 20 of Figure 2 the data from and to the slave 21 are transmitted across two transmission lines, namely a SDA (Serial DAta) line and a SCL (Serial CLock) line. In particular, in the master-slave structure 20 of Figure 2, the data across the SDA line are read according to a timing (clock) given by the SCL line.

In the master-slave structure 20 of Figure 2, as the transmission of data begins, the SDA line and the SCL lines are subsequently set to a first predefined low voltage level. Said low voltage level of the SDA and SCL lines (start condition) identifies the beginning of the transmission of data.

Once the transmission of data has been started, the data are transmitted according to a predefined data transmission protocol allowing the data as transmitted to be recognized and interpreted by the units involved in the transmission.

At the end of the transmission, the transmission lines SCL and SDA are subsequently set to a second predefined high voltage level by the Master involved in the transmission of data. In this way, the signal is given that the transmission is finished that is, the end of the transmission is determined and/or identified by setting the transmission lines SCL and SDA to said second predefined high voltage level.

The hardware synchronization technique as described above has the drawback that continuously switching the transmission lines between the two voltage levels is required; this however, limits the speed at which data can be transmitted, is power consuming and could lead to failures in the transmission of data.

As stated above, the transmission of data may also be synchronized by means of a software. In particular, communication protocols have been developed wherein special rules are applied for defining and/or recognizing the frames containing the data to be transmitted.

According to a first example, the packages of data to be transmitted have a fixed length of 188 bytes and a preselected symbol is used for identifying the beginning of a frame and/or package. In particular, a communication protocol is known, wherein the value "47" (expressed in hexadecimal form) is used for identifying the beginning of a package and/or frame. According to said communication protocol, the beginning of a frame can be found and/or identified by identifying two bytes containing the value "47" and separated by a number of bytes corresponding to the fixed length of the frame, namely 188 bytes.

According to a second example, a communication protocol is used according to which the packages and/or frames may have a variable length and wherein the beginning of the frame is identified by one of the two hexadecimal values 0x01 and 0x02; in particular, the value 0x01 is used in the case of a request sent by the master toward one of the slaves whilst the value 0x02 is used in the case of an answer sent by one of the slaves to the master. However, due to the fact that these values can be used also inside a frame and not only for identifying the beginning of a frame, this communication protocol does not allow to identify the beginning of a frame in a reliable manner and failures in the synchronization procedure must be accepted.

Finally, communication protocols are known, wherein preselected symbols and/or values are used for identifying unambiguously the beginning and the end of a package or frame of data. However, these communication protocols have the disadvantage that the preselected symbols identifying the beginning and the end of a frame, respectively, may not be used in the field of the frame (payload) containing the data to be transmitted. In fact, if one or both of these two symbols would be inserted in the payload, this would generate confusion about the length of the frame, its beginning and its end, and the data contained in the payload could not be read adequately. The driving function carried by the master would therefore become unreliable, thus leading to malfunctioning of the whole master-slave structure.

Accordingly, in view of the problems explained above affecting both the hardware and software prior art solutions, it would be desirable to provide a technique that may solve or reduce one of the problems identified above. In particular, it would be desirable to provide a method of transmitting data adapted to be exploited in the driving unit of a radio communication device, with said method allowing a reliable synchronization of the data transmitted. in other words, it would be desirable to provide a method of transmitting data allowing a reliable transmission of data between the logic unit of a radio transmission device and the other operating units of said device.

### SUMMARY OF THE INVENTION

In general, the present invention is based on the consideration that, in the transmission of data (for instance in a master-slave structure), a reliable synchronization of the data transmitted can be obtained by using two preselected symbols and/or values for defining or identifying the beginning and the end of a package of data or frame. Moreover, the present invention is based on the consideration that said two preselected symbols and/or values may be given another function and/or significance than identifying the beginning and the end of a frame, when used in combination with a third preselected symbol and/or value. The two preselected symbols defining the beginning and the end of a frame are normally contained in preselected fields of the frames. When placed in said preselected fields, the two preselected symbols unambiguously identify the beginning and the end of the frame. On the contrary, when used in combination with the third preselected symbols, the first and second preselected symbols may be placed also in other fields of the frame assuming the same value or defining the same function they would normally do in the field. Accordingly, there is no restriction to the symbols to be used in the field of the frame containing the data to be transmitted (PAYLOAD) but the payload can even contain the two preselected symbols opportunely preceded by the third preselected symbol, respectively.

According to one embodiment, the present invention relates to a communication method for the transmission of data, wherein the data to be transmitted are adapted to be contained in one or more frames and wherein at least a first and a second preselected symbols are used for identifying the start and the end of a frame, respectively. Moreover, a third preselected symbol is adapted to be used in combination with one or both of said first and second preselected symbols so as to give one or both of said first and second preselected symbols a function other than identifying the start and the end of a frame.

According to another embodiment of the present invention there is provided a radio communication device comprising at least a control unit operating as a master and at least a signal processing unit operating as a slave. In said radio communication device data are reciprocally transmitted between the at least one control unit and the at least one signal processing unit according to a method for the transmission of data wherein the data to be transmitted are adapted to be contained in one or more frames and wherein at least a first and second preselected symbols are used for identifying the start and the end of a frame respectively. Moreover, a third preselected symbol is adapted to be used in combination with one or both of said first and second preselected symbols so as to give one or both of said first and second preselected symbols a function other than identifying the start and the end of a frame.

According to a further embodiment, the present invention relates to a master-slave structure adapted to be used in a radio transmission device with said master-slave structure comprising at least a master and at least one slave. In the master-slave structure data are reciprocally transmitted between the at least one master and the at least one slave according to a method for the transmission of data wherein the data to be transmitted are adapted to be contained in one or more frames and wherein at least a first and a second preselected symbols are used for identifying the start and the end of a frame, respectively. Moreover, third preselected symbol is used in combination with one or both of said first and second preselected symbols so as to give one or both of said first and second preselected symbols a function other than identifying the start and the end of a frame.

Further embodiments of the present invention are defined in the appended claims.

### BRIEF DESCRIPTION OF THE DRAWINGS

Further advantages, objects and features as well as embodiments of the present invention are defined in the appended claims and will become more apparent with the following detailed description when taken with reference to the accompanying drawings in which identical or corresponding parts are identified by the same reference numerals. In the drawings:
Figure 1 schematically represents a modern radio communication device;
Figure 2 schematically represents a prior art master-slave structure of the kind used in radio transmission devices;
Figures 3a to 3b relate to 3 corresponding examples of the way frames of data may be structured according to the present invention;
Figure 4 schematically represents the process for recognizing a frame according to the present invention;
Figure 5 represents a block diagram of the method for the parsing of a frame according to the present invention.

### DETAILED DESCRIPTION OF THE INVENTION

While the present invention is described with reference to the embodiments as illustrated in the following detailed description as well as in the drawings, it should be understood that the following detailed description, as well as the drawings are not intended to limit the present invention to the particularly illustrative embodiments disclosed, but rather that the described illustrative embodiments merely exemplify various aspects of the present invention, the scope of which is defined by the appended claims.

The present invention is understood to be of a particular advantage when used for radio transmission (radio/video). For this reason, examples will be given in the following in which corresponding embodiments of the present invention relate to frames of data to be exchanged and/or transmitted in the driving unit of a radio communication device. In particular, in the examples given, said driving unit is depicted as a master-slave structure wherein a control unit operates as a master and at least a signal processing unit operates as a slave. However, it has to be noted that the present invention is not limited to the transmission of data for the purpose of driving a radio communication device but can be used in any other situation in which it is required to transmit data in a reliable manner; in particular the present invention can be used in any situation in which the beginning and the end of the frames of data to be transmitted have to be unambiguously recognized. The present invention is therefore also usable in all these applications and the master-slave structures and/or driving units of radio communication devices described in the following illustrative embodiments are to represent any situation and/or application in which a reliable and well synchronized transmission of data is required.

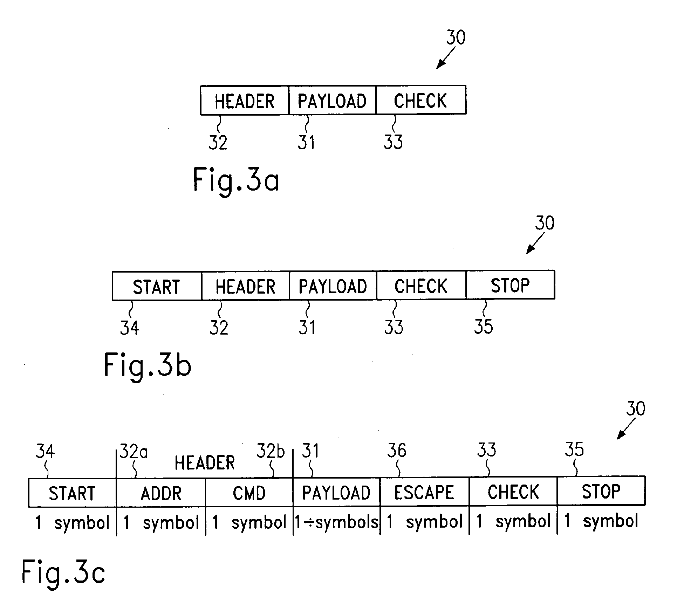

The present invention will now be described with reference to Figures 3a to 3c and 4 to 5.

In Figure 3a, there is depicted the general structure of a frame of the kind used for transmitting data in a master-slave structure. As apparent from Figure 3a, the frame 30 comprises several fields, namely a HEADER field 32, a PAYLOAD field 31 and a CHECK field 33. In particular, the HEADER field 32 contains all the service information such as, for instance, the kind of operation requested, the entity or unit involved in the operation and so on. The PAYLOAD field contains the whole of the data to be transmitted. The CHECK field contains the information needed for validating the frame.

The data are contained in the different fields of the frame as collections of symbols. The number of symbols used as well as the kind of symbols used and their minimum length depends on the protocol used for transmitting the data. In particular, a symbol represents the smallest amount of information which can be transmitted. The length and the number of symbols used may be decided depending on the circumstances.

When a frame as depicted in Figure 3a is sent by a sender to an addressee, for example by a master unit to a slave unit, the need arises for the addressee of unambiguously recognizing the beginning and the end of the frame. This is usually done by implementing a communication protocol containing communication rules such as, for example, the kind of symbols used, the number of symbols, their length and the structure of the frames.

In the following a first embodiment of a communication method (protocol) for the transmission of data according to the present invention will be described with reference to Figures 3b and 3c. In particular, a description will be given in the following with reference to Figures 3b and 3c of the way the present invention allows to unambiguously identify the beginning and the end of a frame, without limiting the symbols usable in the PAYLOAD field containing the data to be transmitted.

As apparent from Figure 3b, essentially two symbols are used, namely a so-called START symbol and a STOP symbol for identifying the beginning and the end of a frame, respectively. The start and stop symbols consist of a predefined number of bits and/or bytes and may be selected between the all symbols belonging to the communication protocol used for the transmission of data.

The START symbol is placed in a corresponding START field 34 at the beginning of the frame; the STOP symbol is placed in a corresponding STOP field 35 at the end of the frame.

When the structure depicted in Figure 3b is used for a frame, the beginning and the end of the frame can be unambiguously recognized. In fact, reading the symbols START and/or STOP corresponds to identify the START and/or STOP fields and the beginning and the end of the frame, respectively. Accordingly, the addressee, for the purpose of recognizing the beginning and the end of the frame, only needs to find the START and STOP symbols within the frame.

However, when a frame as depicted in Figure 3b is used, without any other precaution being taken, the START and STOP symbols cannot be used in fields other than the START and STOP fields 34 and 35. In particular, the START and STOP symbols may not be used in the PAYLOAD field 31 nor in the HEADER field 32 and the CHECK field 33. In fact, using one or both of the START and STOP symbols in fields different than the START and STOP fields 34 to 35 would result in the addressee getting confused and becoming unable to recognize unambiguously the beginning and the start of the frame. This is due to the fact that the addressee is instructed to find the START and STOP symbols in the START and STOP fields 34 and 35 only. Accordingly, finding one or both of the START and STOP symbols in a different field would contradict this protocol rule and thus in turn would generate ambiguities about the real length of the frame that is, the beginning and the end of the frame could not be unambiguously recognized.

To overcome this problem, a third symbol is introduced namely a symbol ESCAPE. In particular, the symbol ESCAPE may be one of the symbols belonging to the protocol but differs from the other symbols in that its function and/or value varies, depending on the way the symbol is used, in particular, depending on the position occupied within the frame.

The symbol ESCAPE is used for giving another function to its following symbol. So, when used in combination with one or both of the START and STOP symbols, the ESCAPE symbol is used for giving the START and STOP symbols another function than identifying and/or defining the beginning and the end of a frame. For instance, it may be established that when the symbol ESCAPE immediately precedes the symbol START within the frame, said symbol START is not to be interpreted as defining the beginning of the frame but the symbol START has to be interpreted in a different way; moreover, the way the START symbol has to be interpreted when immediately preceded by the symbol ESCAPE may be defined in the communication protocol. For instance, it could be established that the symbol START, when preceded by the symbol ESCAPE, defines the usual function it defines in normal condition; that is, the combination of symbols ESCAPE and START, when contained in a field other than the START field, is given the function and/or the value which is normally assigned to the symbol START outside the START field. Alternatively, the combination of symbols ESCAPE and START can be given a predefined function or value, differing from the function and/or value normally assigned to the symbol START when contained in a field other than the START field.

Of course, the same consideration apply to the symbol STOP and the combination of the symbols ESCAPE and STOP and also to the symbol ESCAPE itself and the combination of the symbols ESCAPE and ESCAPE.

In the following, an example will be described with reference to Figure 3c of the way the symbol ESCAPE may be used according to the present invention.

In Figure 3c, those fields of the frame already described with reference to Figures 3a and 3b are identified by the same reference numerals. Accordingly, the description of these fields will be omitted for reason of clarity.

As apparent from Figure 3c, the HEADER field comprises two sub-fields namely a sub-field ADDR 32a and a sub-field CMD 32b. The ADDR field 32a contains the address of the slave to which the frame has to be sent. The ADDR field 32a allows therefore to identify the addressed slave. The field 32a contains a single symbol and may assume all the values between those belonging to the protocol with exception of the values relating to the predefined symbols START, STOP and ESCAPE.

The CMD field 32b identifies the kind of operation the master intends to execute at the addressed slave, namely, at the slave identified in the field 32a. Also the CMD field 32b contains a single symbol and may assume all the values between those belonging to the protocol with exception of the values reserved for the START, STOP and ESCAPE symbols.

The PAYLOAD 31 has a variable length and may contain all the data exchanged between the master and the slave.

In the particular example depicted in Figure 3c, the symbol ESCAPE is placed in the field 36 which precedes immediately the CHECK field 33. Accordingly, as disclosed above, the CHECK field may contain any one of the symbols belonging to the protocol, including the START and STOP symbols. If one of these two symbols is contained in the CHECK field 33 their function would not be defining the beginning or the end of the frame, but another function as explained above.

In the example of Figure 3c, all the fields with exception of the PAYLOAD fields contain a single symbol. However, alternatively all the fields 32a, 32b, 31 and 33 may contain more than one symbol.

In particular, the PAYLOAD field 31 may contain any one of the symbols belonging to the protocol, including the STOP and START symbols when opportunely preceded by the ESCAPE symbol.

The method according to the present invention for transmitting data may comprise rules for generating and recognizing a frame, as well as rules for the receipt, the synchronization and the parsing of a frame.

Some of these rules will be disclosed in the following. In particular, the rules for generating a frame may be summarized as follows:
- Rule g1.: Within all symbols belonging to the protocol three symbols are selected (in the following referred to as controlling symbols) which assume the following corresponding significances:
symbol START; identifies the beginning of a frame
symbol STOP; identifies the end of a frame
symbol ESCAPE; indicates that the following symbol may not be interpreted as a controlling symbol.
- Rule g2.: The symbols START and STOP, placed at the beginning and at the end of the frame, respectively, are compulsory; when one of these two symbols is missing the frame is not valid.
- Rule g3.: The fields ADDR and CMD may not contain one of the controlling symbols.
- Rule g4.: The field PAYLOAD may contain controlling symbols, but each controlling symbol must be preceded by the symbol ESCAPE.

When a frame of data is transmitted, some rules need to be adopted for receiving and recognizing a frame; said rules are listed below.
- Rule rs1.: The beginning of a frame is identified by the symbol START, when this symbol is not preceded by the symbol ESCAPE.
- Rule rs2.: The end of a frame is identified by the symbol STOP, when this symbol is not preceded by the symbol ESCAPE or is preceded by a pair of symbols ESCAPE.

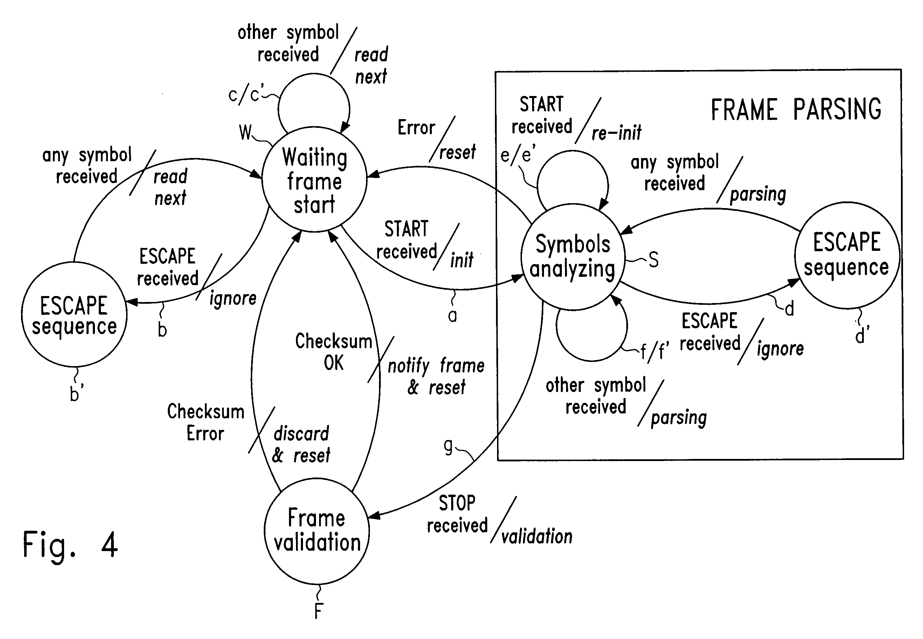

Recognizing and confirming a frame also requires some rules to be complied with; some of these rules will be described in the following with reference to Figure 4.

In Figure 4 there is depicted the diagram of a "Mealy" state machine for recognizing and confirming a frame.

At the beginning of operation the machine is set into a "waiting frame start" status W and reads the entering symbols. One of the following alternatives may come out at this point.

### Alternative a:

a symbol START is read meaning that the beginning of a frame has been probably identified; the machine is then set to the status "symbols analyzing" S and begins to analyze the frame.

### Alternative b:

a symbol ESCAPE is read; the machine reads the subsequent symbol and ignores the symbol ESCAPE (see the sequence b' in Figure 4).

### Alternative c:

any other symbol is read; the machine reads the subsequent symbol and starts the analysis of the frame again (see the sequence c' in Figure 4).

Once the machine has been set to the status "symbols analyzing" S it continues to read the entering symbols and, depending on the symbol read, one of the following alternatives may come out.

### Alternative d:

a symbol ESCAPE is read; the machine reads the subsequent symbol and does not regard said symbol as one of the predefined symbols but as any other symbol (see the sequence d' of Figure 4).

### Alternative e:

a symbol START is read; the probable beginning of a frame has been identified. The machine starts again the analysis of the frame from the beginning (sequence e' of Figure 4).

### Alternative f:

any other symbol is read; the machine analyses the symbol according to a predefined algorithm (sequence f' of Figure 4).

### Alternative g:

a symbol STOP is read; the end of the frame has been recognized. The machine is set to the status "frame validation" F.

If, during one of the operations listed above a mistake or an error is recognized the machines returns to the status "waiting frame start" W and starts again from the beginning.

The validity of a frame is analyzed by verifying the checksum of the frame. In particular, if a valid frame is recognized the frame is identified as valid and the machine is set to zero. On the contrary, if a corrupted frame is identified, the frame is set aside and the machine is put to zero. In both cases, the machine is set to the initial status "waiting frame start".

The following rules may be adopted according to the method of the present invention for executing the parsing of a frame.
- Rule p 1.: the symbol following the symbol START represents the field ADDR of the frame and may not be one of the controlling symbols.
- Rule p 2.: The symbol following the field ADDR represents the field CMD of the frame and may not be one of the controlling symbols.
- Rule p 3.: The symbol before the end of the frame (identified by the symbol STOP) represents the field CHECK of the frame.
- Rule p 4.: The field PAYLOAD is formed by all the symbols following the field CMD and preceding the fields ESCAPE, CHECK and STOP.
- Rule p 5.: Within the field PAYLOAD all the symbols preceded by the symbol ESCAPE may not be regarded as controlling symbols. The symbol ESCAPE does not belong to the real PAYLOAD and must be rejected.

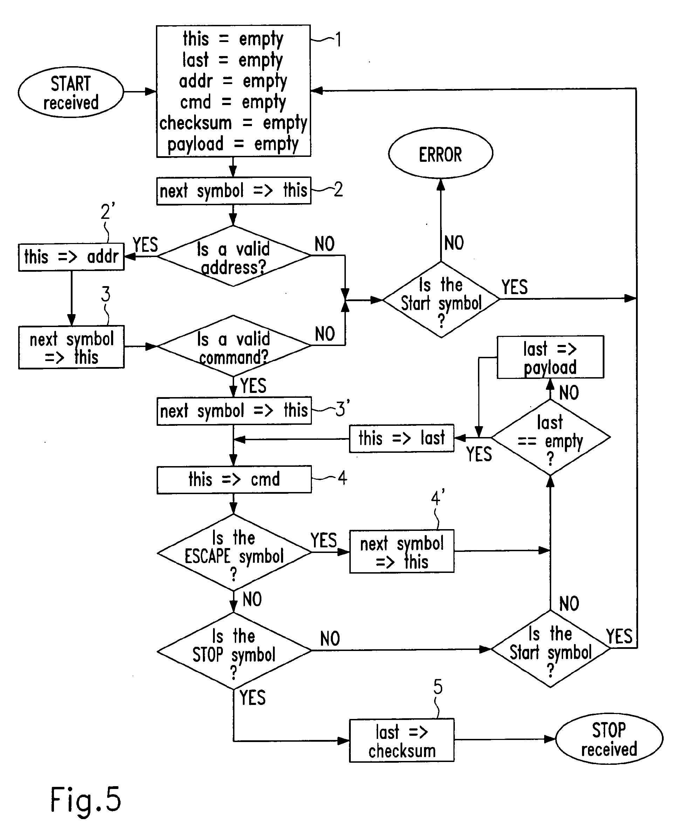

The algorithm for executing the parsing of a frame is will be disclosed next with reference to the flow-chart of Figure 5.

Once the beginning of a frame has been identified, the following steps are executed:
Step 1: initialization step; during this operation all the variables involved are set to zero.
Step 2. the first symbol is analyzed (the symbol should correspond to the field ADDR).
   Is that a valid address?
   YES ⇒ the value of the symbol ADDR is memorized (step 2')
   NO ⇒ is that the symbol START?
   YES ⇒ back to step 1
   NO ⇒ error. Back to the status "waiting frame start".
Step 3: the second symbol is analyzed (this symbol should correspond to the field CMD). Is that a valid symbol?
   YES ⇒ the value of the symbol CMD is memorized.
   NO ⇒ is that the symbol START?
   YES ⇒ back to the operation 1
   NO ⇒ error. Back to the status "waiting frame start"
Step 4: the subsequent symbol is analyzed and the following operations are carried till the end of the frame is recognized i.e. till the symbol STOP is read.
   Is that the symbol ESCAPE?
   YES ⇒ the following symbol is analyzed and inserted into the PAYLOAD (step 4').
   NO ⇒ is that the symbol START?
   YES ⇒ back to the point 1.
   NO ⇒ the symbol is inserted into the PAYLOAD
Step 5: has the end of the frame been recognized (has the symbol STOP been read)?
   YES ⇒ the second last symbol analyzed does not belong to the PAYLOAD but corresponds to the field CHECK.

The system is set to the status "frame validation".

For the purpose of correctly executing the step 5, the second last valid symbol has to be memorized before being inserted into the PAYLOAD. For this reason the variable "last" has been inserted into the algorithm.

The method of transmitting data ("communication protocol") disclosed above allows a reliable synchronization of the frames of data to be transmitted on the basis of a simple analysis of the symbols (software analysis). Moreover, using only three symbols with corresponding predefined significances and/or values does not limit the subject of the field PAYLOAD.

Further, even the field CHECK is not limited in view of the strategic position of the last ESCAPE symbol.

The length of the frames is not fixed but frames of different lengths may be transmitted.

The inventive communication method may be used on both a half-duplex bus and a full-duplex bus. In this respect, it has to be said, that in the case of a full-duplex, using the symbol ESCAPE is needed only in the communications from the master to the slaves.

The inventive protocol is independent from the underlying physical level and the characteristics of the hardware used.

## Claims

1. A communication method for the transmission of data, wherein the data to be transmitted are adapted to be contained in one or more frames (30) and wherein at least a first and a second preselected symbols are used for identifying the start and the end of a frame, respectively, said communication method being
**characterized in that**
a third preselected symbol is used in combination with one or both of said first and second preselected symbols so as to give to one or both of said first and second preselected symbols a function other than identifying the start and the end of a frame.

2. A method as claimed in claim 1, wherein said first and second preselected symbols are given a function other than identifying the start and the end of a frame when they are preceded in the frame (30) by said third preselected symbol.

3. A method as claimed in one of claims 1 and 2, wherein each frame (30) comprises a plurality of fields (31, 32, 33, 34, 35, 36) adapted to contain one or more symbols.

4. A method as claimed in claim 3, wherein said fields comprise at least a START field (34), a STOP field (35) and a PAYLOAD field (31).

5. A method as claimed in claim 4, wherein the START field (34) is adapted to contain the symbol identifying the start of the frame, the STOP field (35) is adapted to contain the symbol identifying the end of the frame and the PAYLOAD field (31) is adapted to contain one or more symbols defining the data to be transmitted.

6. A method as claimed in claim 5, wherein one or both of the first and second symbols may be contained in the PAYLOAD field (31) when preceded by said third preselected symbol.

7. A method as claimed in one of claims 4 to 6, wherein each frame (30) is adapted to further comprise a HEADER field (32) and a CHECK field (33).

8. A method as claimed in claim 7, wherein the HEADER field (32) comprises a ADDR field (32a) and a CMD field (32b).

9. A method as claimed in claim 8, wherein each of said ADDR and CMD fields is adapted to contain a single symbol identifying the address to which the frame is addressed and the operation to be executed, respectively.

10. A method a claimed in one of claims 7 to 9, wherein the CHECK field (33) is adapted to contain a single symbol.

11. A method as claimed in one of claims 7 to 10, wherein the CHECK field (33) is preceded by an ESCAPE field (36) adapted to contain said preselected third symbol only, thus allowing the CHECK field (33) to contain any other symbol.

12. A method as claimed in one of claims 1 to 11, wherein said method is adapted to be used in a master-slave structure (20).

13. A method as claimed in one of claims 1 to 12, wherein the symbols comprise a predefined number of bits.

14. A radio communication device (10) comprising at least a control unit operating as a master and at least a signal processing unit operating as a slave, wherein data are reciprocally transmitted between the at least one control unit and the at least one signal processing unit,
the data being transmitted according to a method for the transmission of data wherein the data to be transmitted are adapted to be contained in one or more frames (30) and wherein at least a first and second preselected symbols are used for identifying the start and the end of a frame, respectively,
**characterized in that**
a third preselected symbol is used in combination with one or more of said first and second preselected symbols so as to give one or both of said first and second preselected symbols a function other than identifying the start and the end of a frame.

15. A device as claimed in claim 14, wherein said first and second preselected symbols are given a function other than identifying the start and the end of a frame (30) when they are preceded in the frame by said third preselected symbol.

16. A device as claimed in one of claims 14 and 15, wherein each frame (30) comprises a plurality of fields (31, 32, 33, 34, 35, 36) adapted to contain one or more symbols.

17. A device as claimed in claim 16, wherein said fields comprise at least a START field (34), a STOP field (35) and a PAYLOAD field (31).

18. A device as claimed in claim 17, wherein the START field (34) is adapted to contain the symbol identifying the start of the frame, the STOP field (35) is adapted to contain the symbol identifying the end of the frame and the PAYLOAD field (31) is adapted to contain one or more symbols defining data to be transmitted.

19. A device as claimed in claim 18, wherein one or both of the first and second symbols may be contained in the PAYLOAD field when preceded by said third preselected symbol.

20. A device as claimed in one of claims 17 to 19, wherein each frame is adapted to further comprise a HEADER field (32) and a CHECK field (33).

21. A device as claimed in claim 20, wherein the HEADER (32) field comprises a ADDR field (32a) and a CMD field (32b).

22. A device as claimed in claim 21, wherein each of said ADDR and CMD fields is adapted to contain a single symbol identifying the address to which the frame is addressed and the operation to be executed, respectively.

23. A device as claimed in one of claims 20 to 22, wherein the CHECK field is adapted to contain a single symbol.

24. A device as claimed in one of claims 20 to 23, wherein the CHECK field is preceded by an ESCAPE field (36) adapted to contain said third preselected symbol only, thus allowing the CHECK field to contain any other symbol.

25. A device as claimed in one of claims 14 to 24, wherein the symbols comprise a predefined number of bits.

26. A master-slave structure (20) adapted to be used in a radio transmission device, with said master-slave structure comprising at least one master (21) and at least one slave (22, 23, 24), wherein data are reciprocally transmitted between the at least one master and the at least one slave;
the data being transmitted according to a method for the transmission of data wherein the data to be transmitted are adapted to be contained in one or more frames (30) and wherein at least a first and a second preselected symbols are used for identifying the start and the end of a frame, respectively,
**characterized in that**
a third preselected symbol is used in combination with one or both of said first and second preselected symbols so as to give one or both of said first and second preselected symbols a function other than identifying the start and the end of a frame.

27. A structure as claimed in claim 26, wherein said first and second preselected symbols are given a function other than identifying the start and the end of a frame when they are preceded in the frame by said third preselected symbol.

28. A structure as claimed in one of claims 26 to 27, wherein each frame (30) comprises a plurality of fields (31, 32, 33, 34, 35) adapted to contain one or more symbols.

29. A structure as claimed in claim 28, wherein said fields comprise at least a START field (34), a STOP field (35) and a PAYLOAD field (31).

30. A structure as claimed in claim 29, wherein the START field is adapted to contain the symbol identifying the START of the frame, the STOP is adapted to contain the symbol identifying the end of the frame and the PAYLOAD field is adapted to contain one or more symbols defining the data to be transmitted.

31. A structure as claimed in claim 30, wherein one or both of the first and second symbols may be contained in the PAYLOAD field when preceded by said third preselected symbol.

32. A structure as claimed in one of claims 29 to 31, wherein each frame is adapted to further comprise a HEADER (32) field and a CHECK field (33).

33. A structure as claimed in claim 32, wherein the HEADER field comprises a ADDR field (32a) and a CMD field (32b).

34. A structure as claimed in claim 33, wherein each of said ADDR and CMD fields are adapted to contain a single symbol identifying the address to which the frame is addressed and the operation to be executed, respectively.

35. A structure as claimed in one of claims 32 to 34, wherein the CHECK field is adapted to contain a single symbol.

36. A structure as claimed in one of claims 32 to 35, wherein the CHECK field is preceded by a ESCAPE field (36) adapted to contain said preselected third symbol only, thus allowing the CHECK field to contain any other symbol.

37. A structure as claimed in one of claims 26 to 36, wherein the symbols comprise a predefined number of bits.
